# EUROPÄISCHE PATENTSCHRIFT

(11) **EP 0 679 109 B1**
(45) Veröffentlichungstag und Bekanntmachung des Hinweises auf die Patenterteilung: **13.11.1996**
(21) Anmeldenummer: 93920665.2
(22) Anmeldetag: 24.09.1993
(51) Int. Cl.: B01D 53/50, B05B 1/16, F23J 15/00

(54) **VORRICHTUNG ZUR REINIGUNG DER RAUCHGASE VON RAUCHGAS-ENTSCHWEFELUNGSANLAGEN DURCH VERSPRÜHEN EINER KALKMILCH-SUSPENSION IN DAS RAUCHGAS**
DEVICE FOR CLEANING FLUE GASES IN FLUE-GAS DESULPHURIZATION INSTALLATIONS BY SPRAYING A LIME SUSPENSION INTO THE FLUE GAS
DISPOSITIF D'EPURATION DES GAZ DE FUMEE D'INSTALLATIONS DE DESULFURATION DES GAZ DE FUMEE PAR VAPORISATION D'UNE SUSPENSION DE LAIT DE CHAUX DANS LE GAZ DE FUMEE

(30) Priorität: 14.01.1993 DE 4300751
(43) Veröffentlichungstag der Anmeldung: 02.11.1995
(73) Patentinhaber: REINTANZ, Bernhard, 34225 Baunatal (DE)
(72) Erfinder: REINTANZ, Bernhard, 34225 Baunatal (DE)
(74) Vertreter: Walther, Robert, Dipl.-Ing.
(86) Internationale Anmeldenummer: DE9300914
(87) Internationale Veröffentlichungsnummer: WO9415700

(56) Entgegenhaltungen:
- EP-A- 0 112 101
- DE-A- 2 153 593
- FR-A- 2 152 815
- FR-A- 2 418 018
- GB-A- 2 149 685

## Beschreibung

Die Erfindung betrifft eine Sprühvorrichtung zur Reinigung der Rauchgase von Rauchgasentschwefelungsanlagen durch Versprühen einer Kalkmilch-Suspension in das Rauchgas.

Zum Zwecke der Reinigung der Rauchgase von Müllverbrennungsanlagen oder Kraftwerken von Schadstoffen, wie z.B. Schwefeldioxyd, ist bekannt, in die Rauchgase eine Kalkmilch-Suspension einzusprühen.

Hierfür ist bekannt, zum Versprühen der Kalkmilch einen spiralförmigen gewundenen, im Querschnitt rechteckigen Führungskanal zu verwenden, der sich zum Auslauf hin verengt, um über diesen Führungskanal die Kalkmilch-Suspension in die Rauchgase einzubringen.

Abgesehen davon, daß mit dieser Vorrichtung der Sprüheffekt unbefriedigend und die Vorrichtung störanfällig ist, da dann nicht sämtliche Rauchgase von dem Sprühnebel erfaßt werden und mithin Teile der Rauchgase unberührt mit der Kalkmilch-Suspension in die Atmosphäre gelangen, besteht auch die Gefahr, daß schon nach kurzer Zeit diese Vorrichtung für die Kalkmilch-Suspension verstopft. Darüber hinaus findet eine Entmischung der Kalkmilch-Suspension innerhalb dieser bekannten Vorrichtung aufgrund der Dichteunterschiede zwischen dem Kalk und dem Wasser statt mit der Folge eines schlechteren Reinigungsergebnisses.

Es ist auch ein Gasreiniger bekannt (EP-A 118 017), bei dem die Rauchgase über eine Zuführleitung in einen Behandlungsraum gelangen, wo die Gase der Einführung einer in einem Bad enthaltenen Reinigungsflüssigkeit ausgesetzt werden. Dazu wird die Flüssigkeit mittels einer rotierenden Scheibenanordnung versprüht, deren Scheiben vorzugsweise über eine hohle Welle ständig mit der Reinigungsflüssigkeit beaufschlagt werden, die dann aufgrund zentrifugaler Kräfte von den rotierenden Scheiben, unter Bildung ringförmiger Sprühzonen, abreißt.

Mit einem solchen Gasreiniger läßt sich eine Feinst-Versprühung der Kalkmilch , bei der eine möglichst intensive Beaufschlagung mit den Rauchgasen erfolgt, nicht erreichen. Darüber hinaus findet hier ebenfalls ein Entmischungseffekt statt.

Aus der DE-A 21 53 593 ist ein Venturiwäscher zur Entfernung von Schwefeldioxyd aus einem Gasstrom bekannt. Eine derartige Vorrichtung ist überaus aufwendig in der Konstruktion und auch nicht unmittelbar in einen Rauchgaswäscher einbaubar; vielmehr muß der Rauchgaswäscher entsprechend der Form des Venturiwäschers umgebaut werden. Hierin liegt auch der Grund, warum sich diese Technik nicht durchgesetzt hat.

Aus der GB-A 21 49 685 ist ein Rotationszerstäuber bekannt, mit dem ebenfalls das Rauchgas in einer Rauchgasentschwefelungsanlage durch Versprühen einer Kalkmilch-Suspension gereinigt wird. Auch dieser Rotationszerstäuber zeichnet sich durch eine aufwendige und verschleißbehaftete Konstruktion aus, die insbesondere für Verstopfungen anfällig ist, wenn die Kalkmilch-Suspension Feststoffe enthält, die den Zerstäuber zusetzen.

Der Erfindung liegt daher die Aufgabe zugrunde, eine Sprühvorrichtung zu schaffen, die sich durch einen einfachen und preiswerten Aufbau auszeichnet, die wartungsarm und verstopfungsfrei arbeitet, und durch die darüber hinaus sichergestellt ist, daß die Kalkmilch-Suspension so versprüht wird, daß damit sämtliche Rauchgase in Berührung kommen, mithin also Teile von Rauchgasen nicht nach außen gelangen können, die mit der Kalkmilch-Suspension nicht in Berührung gekommen sind.

Nach der Erfindung ist die Sprühvorrichtung zur Reinigung der Rauchgase durch Versprühen einer Kalkmilch-Suspension gekennzeichnet durch ein Zulaufrohr für die Kalkmilch-Suspension, wobei dem Zulaufrohr in Strömungsrichtung der zu verteilenden Suspension ein Kegelmantel mit ebener Kegelfläche zugeordnet ist, wobei der Kegelmantel mittels einer Halterung am Zulaufrohr angeordnet ist, wobei die Kegelspitze in Richtung auf das Zulaufrohr ausgerichtet ist, wobei die Kegelspitze des Kegelmantels einen Abstand von der Austrittsöffnung des Zulaufrohres aufweist, wobei der Abstand der Kegelspitze von der Austrittsöffnung umso kleiner bemessen ist, je kleiner der Durchmesser der Austrittsöffnung gewählt ist. Hierbei ist vorzugsweise der Kegelmantelrandbereich zur Mittelachse des Kegels hin abgewinkelt, d.h. es findet ein Übergang vom Kegel zu einem Kegelstumpf statt, um durch diese Abrißkante eine vergleichmäßigte Strömung zu erzeugen.

Dabei ist der Kegelmantel mittels einer mittig angebrachten Stegplatte am Zulaufrohr für die Flüssigkeit gehalten, wobei die Stegplatte mittig in Strömungsrichtung eine Aussparung aufweist. Hierbei ist die Austrittsöffnung des Zulaufrohres ebenfalls mit einer Abrißkante in Form eines Kegelstumpfes versehen, um eine vergleichmäßigte Austrittsströmung zu erreichen.

Mit Hilfe dieser Vorrichtung wird mithin die aus dem Zulaufrohr austretende Kalkmilchsuspension auf den im Abstand von dem Zulaufrohr angeordneten Kegelmantel aufgetragen und verteilt sich auf dem Kegelmantel derart, daß ein Flüssigkeitsmantel ohne Gassenbildung entsteht.

Dieser Flüssigkeitsmantel deckt im gesamten Querschnittsbereich der Rauchgasströmung die Rauchgase ab, so daß mithin die Kalkmilch-Suspension mit sämtlichen Rauchgasen in Berührung kommt.

Die mittige Aussparung in der als Stegplatte ausgebildeten Halterung für den Kegelmantel stellt sicher, daß die aus der Austrittsöffnung des Zulaufrohres austretende Kalkmilch-Suspension behinderungsfrei auf den Kegelmantel auftreffen kann, so daß damit eine gleichmäßige Verteilung der Flüssigkeit auf den Kegelmantel, sowie das sichere Abführen von in der Kalkmilch-Suspension mitgeführten Feststoffteilen gewährleistet ist.

Nach einer anderen Ausführungsform kann der Kegelmantel auch mittels einer, zwei oder drei exzentrisch zur Austrittsöffnung des Zulaufrohres angebrachten Halterungen abgestützt sein, die umfangsverteilt am Zulaufrohr angebracht sind.

Auch bei dieser Ausführungsform ist sichergestellt, daß die aus dem Zulaufrohr austretende Kalkmilch-Suspension behinderungsfrei auf den Kegelmantel auftreffen kann.

Eine weitere Ausführungsform ist dadurch gekennzeichnet, daß der Kegelmantel mittels einer einzigen exzentrisch zum Zulaufrohr angebrachten Halterung am Zulaufrohr gehalten ist.

Weiterhin kann die Kegelspitze des Kegelmantels seitlich versetzt zur Mittellinie der Auslauföffnung des Zulaufrohres angeordnet sein.

Bei dieser Ausführungsform ist gewährleistet, daß eine einseitige (zu einer Seite hin gerichtete) Ableitung der in der Kalkmilch-Suspension enthaltenen Feststoffe stattfindet. Bei entsprechender Anordnung im Bereich der Rauchgaswände kann somit erreicht werden, daß die an der Innenseite der Rauchgaswände angebrachte Beschichtung nur einem geringen Verschleiß durch die Feststoffteile ausgesetzt ist.

Bei den Ausführungsformen, bei denen die Halterung in Form von Stegen ausgebildet ist, die exzentrisch zur Austrittsöffnung des Zulaufrohres angeordnet sind, ist der Steg im Bereich der Eintrittsstelle in den Kegelmantel mit einem stromlinienförmigen, sattelartigen Schwert auf dem Kegelmantel versehen. Hierbei ist der Ansatzpunkt des Schwertes auf dem Kegelmantel vorteilhaft so gewählt, daß er fluchtend unterhalb der Innenwandung des Zulaufrohres liegt. Hierdurch wird erreicht, daß der in diesem Bereich auftreffende Strahl der Kalkmilch-Suspension durch Zerteilung optimal geleitet wird. Darüber hinaus wird durch diese Maßnahme auch der Verschleiß vermindert und es entstehen im Auftreffpunkt zwischen Kalkmilch-Suspension und Sattelansatz auf dem Kegelmantel nur geringfügige Verwirbelungen.

Durch diese Ausbildung ist somit erreicht, daß die auf den Kegelmantel auftreffende Flüssigkeit durch die Halterung hinsichtlich ihrer gassenfreien Verteilung auf dem Kegelmantel nicht behindert wird.

Der Kegelwinkel kann zwischen 60° und 150°, vorzugsweise jedoch zwischen 80° und 130° betragen.

In der Zeichnung sind mehrere beispielsweise Ausführungsformen der Vorrichtung dargestellt.
Fig. 1 zeigt schematisch die Anordnung der Vorrichtung innerhalb des Rauchgaskanals;
Fig. 2 zeigt die eine Ausführungsform des Kegelmantels, insbesondere die Halterung am Zulaufrohr;

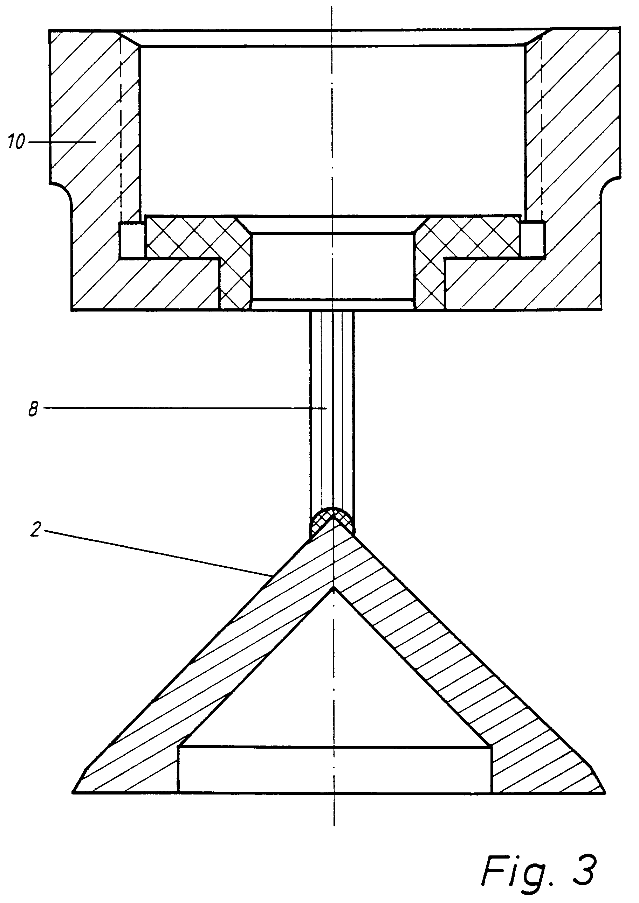

Fig. 3 zeigt eine Seitenansicht zu dem Gegenstand gemäß Fig. 2 im Schnitt;
Fig. 4 zeigt eine weitere Ausführungsform, insbesondere eine andere Halterung am Zulaufrohr;
Fig. 5 zeigt einen Schnitt gemäß der Linie V-V aus Fig. 4;
Fig. 6 zeigt wieder eine andere Ausführungsform, bei der die Kegelspitze exzentrisch zur Mittellinie der Austrittsöffnung des Zulaufrohres liegt;
Fig. 7 zeigt einen Schnitt gemäß der Linie VII-VII aus Fig. 6 .

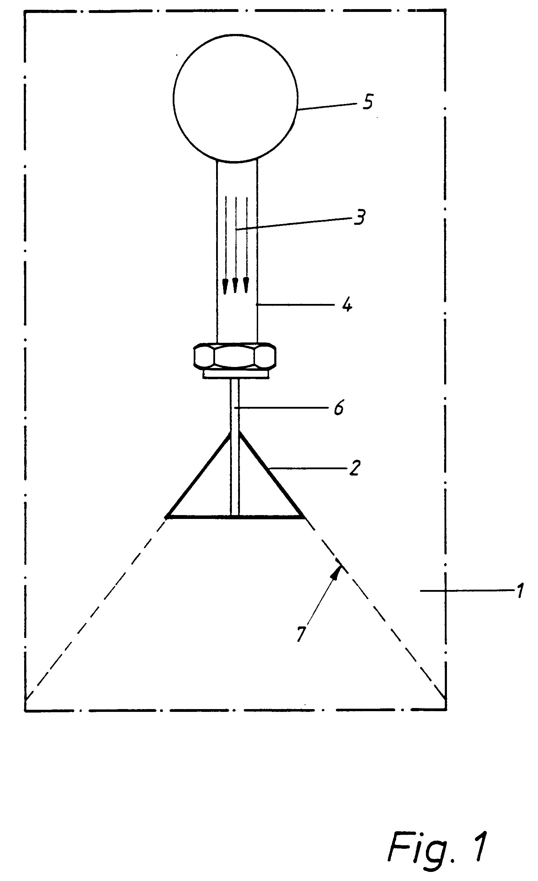

Wie Fig. 1 schematisch zeigt, ist in dem Rauchgaskanal 1 ein Kegelmantel 2 mit ebener Kegelfläche angeordnet, der mittig zur Strömungsrichtung 3 für die Kalkmilch-Suspension liegt. Das Zulaufrohr für die Kalkmilch-Suspension ist dabei mit 4 bezeichnet, das mit einem quer dazu angeordneten Verteilerrohr 5 verbunden ist. Die Halterung für den Kegelmantel 2 ist schematisch mit 6 bezeichnet.

Man erkennt, daß beim Einströmen der Kalkmilch-Suspension über das Rohr 4 diese auf den Kegelmantel 2 trifft und sich dort über die Fläche des ebenen Kegelmantels gleichmäßig verteilt, so daß ein Flüssigkeitsmantel 7 gebildet wird, der den von den Rauchgasen durchströmten Querschnittsbereich abdeckt. Die im Rauchgaskanal 1 strömenden Rauchgase werden von diesem Flüssigkeitsmantel nahezu vollständig beaufschlagt und somit mit der Kalkmilch-Suspension in Berührung gebracht, wobei dort die bekannte chemische Reaktion stattfindet (Gipsbildung).

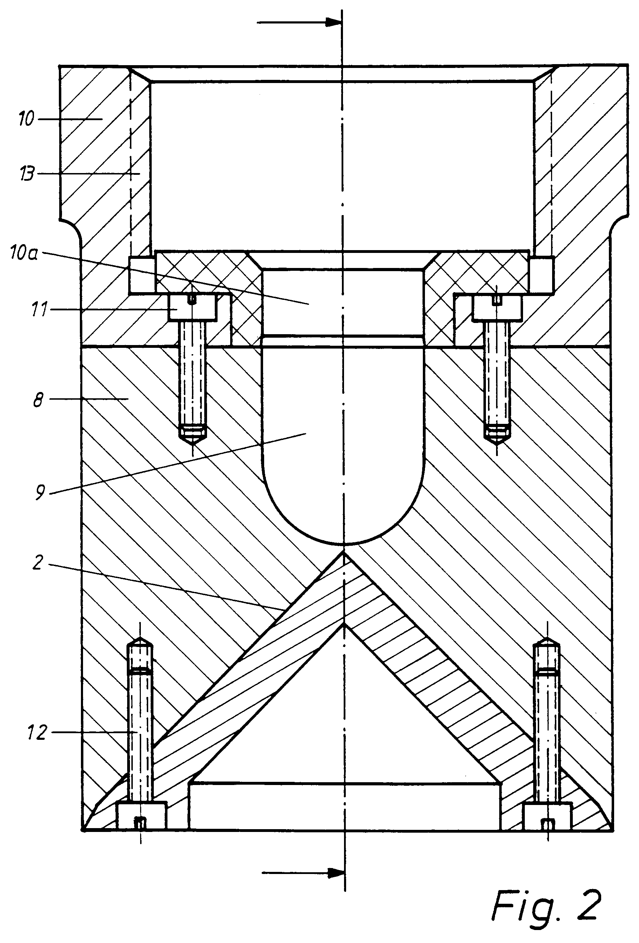

In Fig. 2 ist im einzelnen die Halterung für den Kegelmantel 2 dargestellt; man erkennt, daß der Kegelmantel mit Hilfe einer Stegplatte 8 gehalten ist, die mittig zur Austrittsöffnung 10a des Zulaufrohres 10 angeordnet ist und die mittig eine Aussparung 9 aufweist.

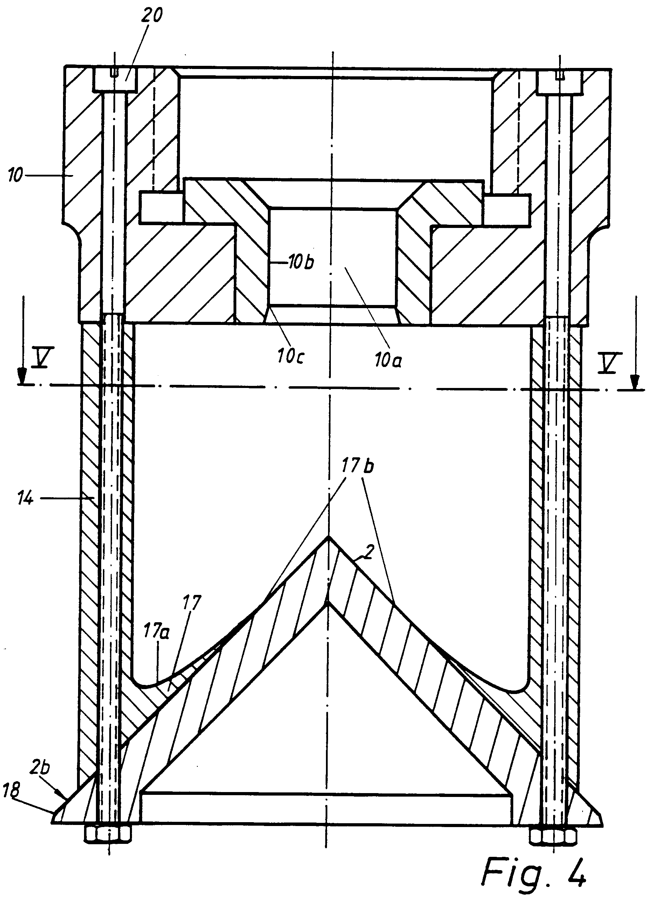

Die Stegplatte 8 ist am Zulaufrohr 10 mit Hilfe von Schrauben 11 befestigt. Die Befestigung der Stegplatte 8 am Kegelmantel erfolgt mit Hilfe der Schrauben 12. Die Gewindebefestigung des Zulaufrohres 10 ist mit 13 bezeichnet. Daraus ergibt sich, daß die Strömungsflüssigkeit innerhalb der Wandung der Gewindebefestigung 13 dem Kegelmantel 2 zufließt und daß die Kegelfläche des Kegelmantels 2 einen bestimmten Abstand von der Austrittsöffnung 10a des Zulaufrohrers 10 aufweist. Ist der Durchmesser der Austrittsöffnung 10a kleiner, dann ist auch der Abstand der Kegelspitze von der Austrittsöffnung kleiner und umgekehrt. Zwecks Veränderung des Durchmessers der Austrittsöffnung 10a kann eine auswechselbare Düse mit dieser Austrittsöffnung, und der entsprechenden Abreißkante versehen sein (vergl. Fig. 4).

In Fig. 4 ist eine andere Halterung für den Kegelmantel 2 dargestellt. Diese Halterung ist exzentrisch zur Austrittsöffnung 10a angeordnet und besteht aus Stegen 14, die umfangsverteilt am Zulaufrohr 10 angebracht sind. Am unteren Ende des Steges erfolgt die Befestigung des Kegelmantels mit Hilfe eines stromlinienförmigen, sattelartigen Schwertes 17. In den Steg reicht eine Befestigungsschraube 20, durch die insgesamt der Kegelmantel am Zulaufrohr gehalten ist.

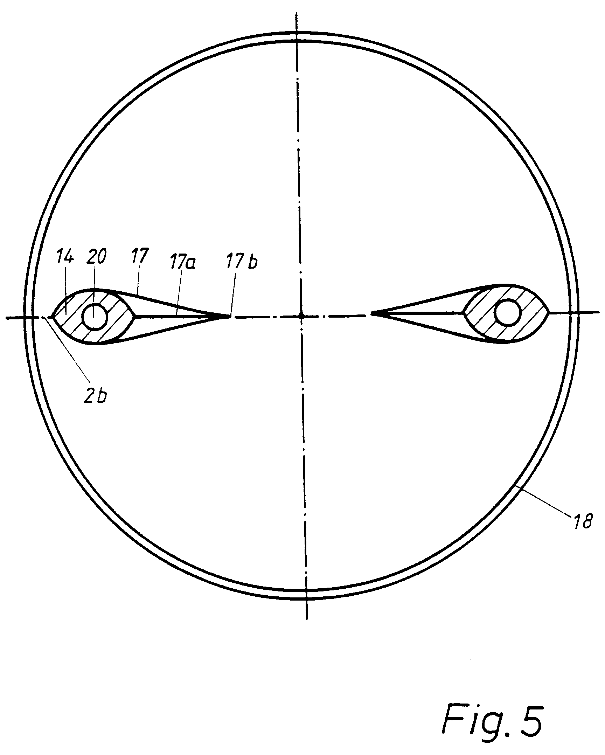

Das stromlinienförmige, sattelartige Schwert 17 ergibt sich insbesondere aus der Fig. 5. Man erkennt, daß das Schwert an der der Strömung zugewandten Seite schneidenförmig (bei 17a) ausgebildet ist. Der Ansatzpunkt 17b der Schneide 17a des Schwertes 17 auf dem Kegelmantel 2 ist so gewählt, daß der Ansatzpunkt 17b in etwa fluchtend unterhalb der Innenwandung10b des Zulaufrohres 10a liegt (Fig.4). Hierbei ist nach der stromlinienförmigen Kegelbefestigung in Abströmrichtung noch ausreichend Kegelfläche (bei 2b) vorhanden, um die Bildung des gassenfreien Flüssigkeitsmantels zu gewährleisten.

Auch diese Ausbildung stellt sicher, daß die auf den Kegelmantel auftreffende Flüssigkeit sich auf dem Kegelmantel verteilt und mithin ein Flüssigkeitsmantel möglichst unter Vermeidung von Gassenbildung geschaffen wird, der den gesamten Querschnittsbereich des Rauchgaskanales abdeckt.

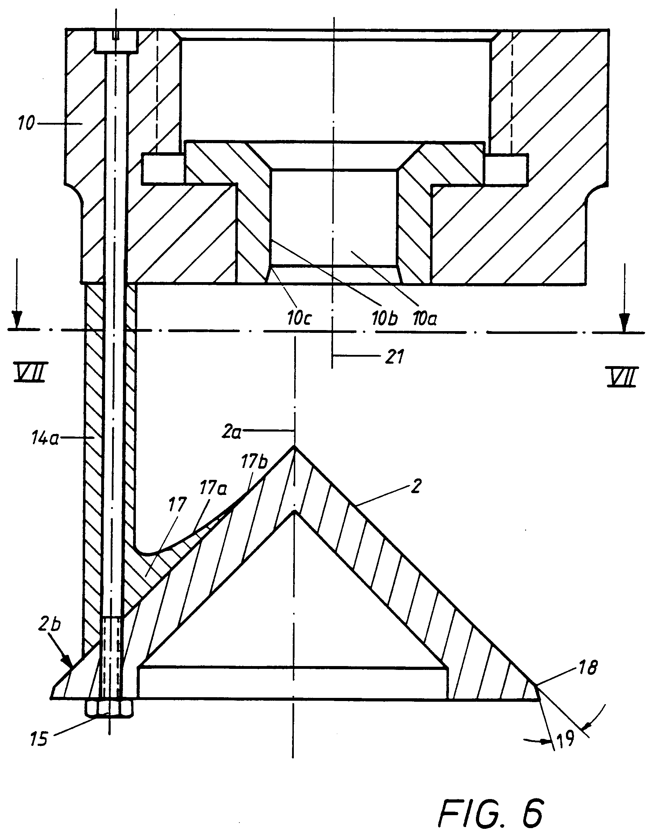

In Fig. 6 ist wieder eine andere Ausführungsform dargestellt.

Dabei erfolgt die Halterung des Kegelmantels 2 mit Hilfe eines einzigen, exzentrisch zur Mittellinie der Austrittsöffnung des Zulaufrohres 10 angeordneten Steges 14a. Die Besonderheit ist dabei, daß die Kegelspitze 2a des Kegels seitlich versetzt zur Mittellinie 21 der Austrittsöffnung 10a des Zulaufrohres 10 liegt.

Dadurch kann erreicht werden, daß eine einseitige Ableitung der in der Kalkmilch-Suspenion enthaltenen Feststoffe stattfindet. Bei entsprechender Anordnung im Rauchgaskanal kann mithin erreicht werden, daß die innere Beschichtung der Rauchgaskanalwand einem geringeren Verschleiß unterworfen ist, weil dann die Feststoffteile nur zu einem geringeren Teil an die Wand gelangen.

Auch bei dieser Ausbildungsform erfolgt die Befestigung des Kegelmantels mit Hilfe eines stromlinienförmigen, sattelartigen Schwertes 17, die an der der Strömung zugewandten Seite eine Schneide 17a aufweist.Gehalten wird der Steg 14a durch die Schrauben 15.

Aus der Darstellung ist ebenfalls ersichtlich, daß bei allen gleichartigen Ausführungsformen nach der stromlinienförmigen Kegelbefestigung in Abströmrichtung noch ausreichend Kegelfläche (bei 2b) vorhanden ist, um die Bildung des gassenfreien Flüssigkeitsmantels zu gewährleisten. Damit beim Abströmen vom Kegelmantel eine möglichst glatte Strömung zustande kommt, kann bei allen Ausführungsformen im Randbereich 2a des Kegelmantels eine Flüssigkeitsabrißkante in Form einer Abwinkelung 18 vorgesehen sein. Der entsprechende Winkel ist mit 19 bezeichnet.

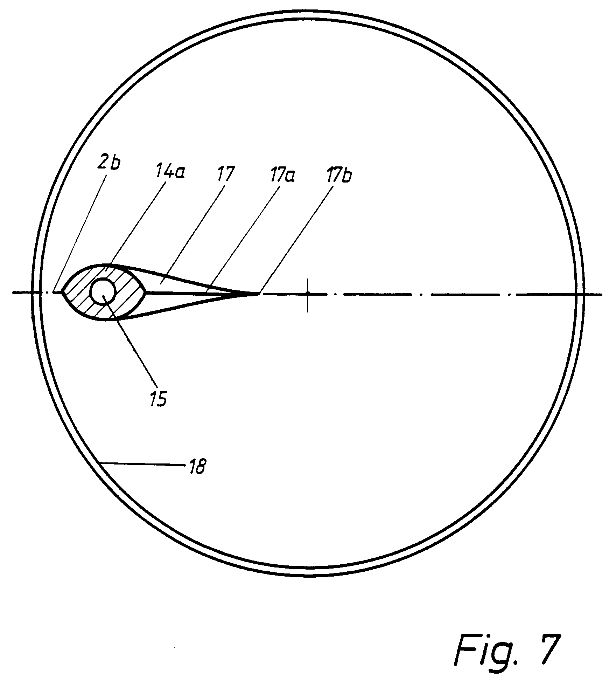

Fig. 7 zeigt eine Draufsicht auf den Gegenstand gemäß Fig. 6 im Bereich des Schnittes VII-VII, woraus deutlich wird, daß der weitaus größte Bereich des Kegelmantels eine freie Fläche darstellt.

## Patentansprüche

1. Sprühvorrichtung zur Reinigung der Rauchgase von Rauchgas-Entschwefelungsanlagen durch Versprühen einer Kalkmilch-Suspension in das Rauchgas,
**gekennzeichnet durch**
ein Zulaufrohr (10) für die Kalkmilch-Suspension, wobei dem Zulaufrohr (10) in Strömungsrichtung der zu verteilenden Suspension ein Kegelmantel (2) mit ebener Kegelfläche zugeordnet ist, wobei der Kegelmantel mittels einer Halterung am Zulaufrohr angeordnet ist, wobei die Kegelspitze in Richtung auf das Zulaufrohr (10) ausgerichtet ist, wobei die Kegelspitze des Kegelmantels (2) einen Abstand von der Austrittsöffnung des Zulaufrohres aufweist, wobei der Abstand der Kegelspitze von der Austrittsöffnung umso kleiner bemessen ist, je kleiner der Durchmesser der Austrittsöffnung (10a) gewählt ist.

2. Vorrichtung nach Anspruch 1,
**dadurch gekennzeichnet**, daß
der Kegelmantelrandbereich zur Mittelachse des Kegels hin abgewinkelt (19) ist.

3. Vorrichtung nach Anspruch 1,
**dadurch gekennzeichnet**, daß
der Kegelmantel (2) mittels einer mittig angebrachten Stegplatte (8) am Zulaufrohr für die Flüssigkeit gehalten ist, wobei die Stegplatte (8) mittig in Strömungsrichtung eine Aussparung (9) besitzt.

4. Vorrichtung nach Anspruch 1,
**dadurch gekennzeichnet**, daß
der Kegelmantel (2) durch exzentrisch zur Austrittsöffnung (10a) des Zulaufrohres (10) angebrachten Halterungen (14) gestützt ist, die umfangsverteilt am Zulaufrohr (10) angeordnet sind.

5. Vorrichtung nach Anspruch 1,
**dadurch gekennzeichnet**, daß
der Kegelmantel (2) mittels einer einzigen exzentrisch zum Zulaufrohr (10) angebrachten Halterung am Zulaufrohr (10) gehalten ist.

6. Vorrichtung nach Anspruch 4 und 5,
**dadurch gekennzeichnet**, daß
die Halterung ein Steg (14, 14a) ist, der im Bereich der Eintrittstelle in den Kegelmantel mit einem stromlinienförmigen, sattelartigen Schwert (17) versehen ist.

7. Vorrichtung nach Anspruch 6,
**dadurch gekennzeichnet**, daß
das stromlinienförmige, sattelartige Schwert (17) an der der Strömung zugewandten Seite schneidenförmig (17a) ausgebildet ist.

8. Vorrichtung nach Anspruch 5,
**dadurch gekennzeichnet**, daß
der Ansatzpunkt (17b) der Befestigung auf dem Kegelmantel (2) so gewählt ist, daß er etwa fluchtend unterhalb der Innenwandung (10b) des Zulaufrohres (10) liegt.

9. Vorrichtung nach Anspruch 1,
**dadurch gekennzeichnet**, daß
die Kegelspitze des Kegelmantels seitlich versetzt zur Mittellinie (21) der Austrittsöffnung (10a) des Zulaufrohres angeordnet ist.

10. Vorrichtung nach Anspruch 1,
**dadurch gekennzeichnet**, daß
der Kegelwinkel zwischen 60° und 150°, vorzugsweise jedoch zwischen 80° und 130° beträgt.

11. Vorrichtung nach Anspruch 3,
**dadurch gekennzeichnet**, daß
die Austrittsöffnung (10a) des Zulaufrohres (10) eine Abrißkante (10c) in Form eines Kegelstumpfs aufweist.

12. Vorrichtung nach Anspruch 1,
**dadurch gekennzeichnet,** daß
nach der Befestigung des Kegels durch Stege (14, 14a) in Abströmrichtung noch ausreichend Kegelfläche (bei 2b) zur Bildung eines gassenfreien Flüssigkeitsmantels vorhanden ist.

## Claims

1. Spray device for the cleaning of the flue gases of flue-gas desulphurisation installations by spraying of a lime suspension into the flue gas, characterised by a feed pipe (10) for the lime suspension, wherein a cone envelope (2) with a flat cone surface is associated with the feed pipe (10) in flow direction of the suspension to be distributed, wherein the cone envelope is arranged at the feed pipe by means of a mount, wherein the cone tip is aligned in direction towards the feed pipe (10), wherein the cone tip of the cone envelope (2) has a spacing from the outlet opening of the feed pipe, and wherein the spacing of the cone tip from the outlet opening is dimensioned to be smaller the smaller the diameter of the outlet opening (10a) is selected to be.

2. Device according to claim 1, characterised thereby that the cone envelope edge region is angled (19) relative to the centre axis of the cone.

3. Device according to claim 1, characterised thereby that the cone envelope (2) is mounted by means of a centrally mounted web plate (8) at the feed pipe for the liquid, wherein the web plate (8) has a recess (9) centrally in flow direction.

4. Device according to claim 1, characterised thereby that the cone envelope (2) is supported by mounts (14) which are mounted eccentrically relative to the outlet opening (10a) of the feed pipe (10) and which are arranged circumferentially distributed at the feed pipe (10).

5. Device according to claim 1, characterised thereby that the cone envelope (2) is mounted at the feed pipe (10) by means of a single mount mounted eccentrically relative to the feed pipe (10).

6. Device according to claim 4 and 5, characterised thereby that the mount (14, 14a) is a web, which is provided in the region of the entry location in the cone envelope with a streamlined saddle-shaped tongue (17).

7. Device according to claim 6, characterised thereby that the streamline saddle-shaped tongue (17) is formed to be blade-shaped (17a) at the side facing the flow.

8. Device according to claim 5, characterised thereby that the attachment point (17b) of the fastening to the cone envelope (2) is so selected that it lies approximately aligned below the inner wall (10b) of the feed pipe (10).

9. Device according to claim 1, characterised thereby that the cone tip of the cone envelope is arranged to be offset laterally relative to the centre line (21) of the outlet opening (10a) of the feed pipe.

10. Device according to claim 1, characterised thereby that the cone angle amounts to between 60° and 150°, preferably, however, between 80° and 130°.

11. Device according to claim 3, characterised thereby that the outlet opening (10a) of the feed pipe (10) has a tear-off edge (10a) in the form of a conical frustrum.

12. Device according to claim 1, characterised thereby that as regards the fastening of the cone by webs (14, 14a) still sufficient cone area (at 2b) is present in downstream direction for formation of a gas-free liquid envelope.

## Revendications

1. Dispositif de pulvérisation pour nettoyer les gaz de fumée d'une installation de désulfurisation des gaz de fumée par pulvérisation dans les gaz de fumée d'une suspension de lait de chaux,
**caractérisé par** un conduit d'amenée (10) pour la suspension de lait de chaux, dans lequel, un manteau conique (2) à surface conique plane est associé au conduit d'amenée (10) dans la direction du flux de la dispersion à répartir, dans lequel le manteau conique est fixé au conduit d'amenée au moyen d'un support, dans lequel la pointe du cône est orientée en direction du conduit d'amenée (10), dans lequel la pointe du cône du manteau conique (2) est disposée à distance de l'ouverture d'évacuation du conduit d'amenée, dans lequel la distance de la pointe du cône à l'ouverture d'évacuation est d'autant plus faible que le diamètre de l'ouverture d'évacuation (10a) est choisi plus petit.

2. Dispositif selon la revendication 1,
**caractérisé en ce que** la zone du bord du manteau conique est coupée selon un angle (19) par rapport à l'axe central du cône.

3. Dispositif selon la revendication 1,
**caractérisé en ce que** le manteau conique (2) est maintenu au moyen d'une plaque de support (8) disposée de façon centrale, contre le conduit d'amenée du liquide, dans lequel la plaque de support (8) comporte un évidement (9) ménagé de façon centrale dans la direction du flux.

4. Dispositif selon la revendication 1,
**caractérisé en ce que** le manteau conique (2) est soutenu par des supports (14) disposés excentriquement par rapport à l'ouverture d'évacuation (10a) du conduit d'amenée (10), ces supports étant répartis à la périphérie du conduit d'amenée (10).

5. Dispositif selon la revendication 1,
**caractérisé en ce que** le manteau conique (2) est maintenu contre le conduit d'amenée (10) au moyen d'un support unique fixé excentriquement au conduit d'amenée (10).

6. Dispositif selon les revendications 4 et 5,
**caractérisé en ce que** le support est constitué par une colonne (14, 14a) qui est pourvue d'un prolongement en forme de selle (17) dont le profil correspond aux lignes de courant, et disposé dans la zone d'entrée du manteau conique.

7. Dispositif selon la revendication 6,
**caractérisé en ce que** le prolongement en forme de selle (17) est tranchant (17a) du côté orienté vers le flux.

8. Dispositif selon la revendication 5,
**caractérisé en ce que** le point de raccordement (17b) avec le manteau conique (2) est choisi de telle manière qu'il s'évase de façon divergente en dessous de la paroi intérieure (10b) du conduit d'amenée (10).

9. Dispositif selon la revendication 1,
**caractérisé en ce que** la pointe du cône du manteau conique est décalée latéralement par rapport à l'axe central (21) de l'ouverture d'évacuation (10a) du conduit d'amenée.

10. Dispositif selon la revendication 1,
**caractérisé en ce que** l'angle du cône est compris entre 60° et 150°, et de préférence entre 80° et 130°.

11. Dispositif selon la revendication 3,
**caractérisé en ce que** l'ouverture d'évacuation (10a) du conduit d'amenée (10) comporte un chanfrein de décollement (10c) en forme de tronc de cône.

12. Dispositif selon la revendication 1,
**caractérisé en ce qu'une** surface de cône suffisante est disponible (en 2b) pour former un manteau de fluide sans gaz, après fixation du cône par des colonnes (14, 14a), dans la direction de sortie du flux.
